# EUROPEAN PATENT APPLICATION

(11) **EP 4 756 574 A1**
(43) Date of publication of application: **10.06.2026**
(21) Application number: 25738442.0
(22) Date of filing: 08.01.2025
(51) Int. Cl.: G06F 1/3234, G06F 9/451, G06F 3/14

(54) **FRAME SENDING AND DISPLAYING TIME ANCHORING METHOD, ELECTRONIC DEVICE, AND STORAGE MEDIUM**

(30) Priority: 10.01.2024 CN 202410038650
(71) Applicant: Honor Device Co., Ltd., Shenzhen, Guangdong 518040 (CN)
(72) Inventor: XU, Tao, Shenzhen, Guangdong 518040 (CN); YANG, Zudi, Shenzhen, Guangdong 518040 (CN)
(74) Representative: Isarpatent
(86) International application number: PCT/CN2025/071212
(87) International publication number: WO 2025/148913

(57) **Abstract**

This application discloses a frame sending and display time anchoring method, an electronic device, and a storage medium, and relates to the field of terminal technologies. The method includes: When it is detected that a jump occurs in a VSYNC signal, a terminal device first calculates an expected sending and display time of a target frame through an SF; then determines whether the target frame is a first frame and whether a current time is less than an earliest sending and display time; if yes, sends the expected sending and display time to an HWC in a HAL layer; then calculates, based on the expected sending and display time and a period of the VSYNC signal, a time period in which the HWC needs to suspend sending and display; and then controls, based on the time period in which the HWC needs to suspend sending and display, the HWC to perform a sleep operation until an incorrect sending and display time is missed, and when the expected sending and display time is reached, performs an operation of sending and displaying the target frame on a screen. In this way, the expected sending and display time is packaged only for the first frame, and is transmitted to the HWC to anchor the sending and display time. This can reduce anchoring costs, shorten a parameter transmission path, and improve maintainability of the anchoring method.

## Description

This application claims priority to Chinese Patent Application No. 202410038650.9, filed with the China National Intellectual Property Administration on January 10, 2024 and entitled "FRAME SENDING AND DISPLAY TIME ANCHORING METHOD, ELECTRONIC DEVICE, AND STORAGE MEDIUM", which is incorporated herein by reference in its entirety.

### TECHNICAL FIELD

This application relates to the field of terminal technologies, and in particular, to a frame sending and display time anchoring method, an electronic device, and a storage medium.

### BACKGROUND

With continuous development of science and technology, terminal devices represented by a mobile phone and a tablet computer are increasingly used in people's lives and work, which brings great convenience to people. For example, people can take photos, watch videos, play music, or the like through the terminal devices.

Currently, each time a display system (SurfaceFlinger, SF) of the terminal device composes a frame of signal, an expected sending and display time of the current frame is packaged and transmitted to a display driver for processing, to implement frame sending and display time anchoring, and avoid delayed frame loss that affects user experience. However, this frame sending and display time anchoring manner has relatively high costs, an excessively long transmission path, and relatively poor maintainability, resulting in a relatively poor frame sending and display time anchoring effect.

### SUMMARY

To resolve the foregoing problem, this application provides a frame sending and display time anchoring method, an electronic device, and a storage medium, to reduce frame sending and display time anchoring costs, shorten a parameter transmission path, and improve maintainability of the anchoring method, so as to improve a frame sending and display time anchoring effect.

According to a first aspect, this application provides a frame sending and display time anchoring method. The method includes: When it is detected that a jump occurs in a virtual level VSYNC signal, a terminal device first calculates an expected sending and display time of a target frame through an SF; then determines whether the target frame is a first frame and whether a current time is less than an earliest sending and display time; if yes, sends the expected sending and display time to an HWC in a HAL layer; then calculates, based on the expected sending and display time and a period of the VSYNC signal, a time period in which the HWC needs to suspend sending and display; and then may control, based on the time period in which the HWC needs to suspend sending and display, the HWC to perform a sleep operation until an incorrect sending and display time is missed, and when the expected sending and display time is reached, perform an operation of sending and displaying the target frame on a screen.

It may be learned that in the frame sending and display time anchoring method, the expected sending and display time is no longer packaged and transmitted for all frames. Instead, after it is identified that the target frame that needs to be sent and displayed is the first frame, the expected sending and display time is packaged and a layer parameter is calculated only for the first frame, and are transmitted to the HWC. This effectively reduces frame sending and display time anchoring costs, and improves anchoring efficiency. In addition, parameters such as the expected sending and display time no longer continue to be transmitted to a lower-layer display driver for processing. Instead, parameter delivery is blocked in the HWC, related frame sending and display logic in the display driver is removed and deployed in the HWC, to anchor the sending and display time through the HWC, and then an operation of performing sending and display on the screen is performed. In this way, anchoring of the expected sending and display time is optimized, that is, a parameter transmission path is shortened, and maintainability of the anchoring method is improved, to improve an anchoring effect.

In a possible implementation, the VSYNC signal is a virtual signal obtained through fitting based on a refresh rate of the display screen of the terminal device; and the VSYNC signal is used to control an occasion of obtaining a layer by the display system SF for preprocessing.

In a possible implementation, the calculating an expected sending and display time of a target frame through a display system SF may include: calculating the expected sending and display time of the target frame through the display system SF based on the VSYNC signal and work duration VysncWorkDuration of the VSYNC signal.

In a possible implementation, before it is determined whether the target frame is the first frame and whether the current time is less than the earliest sending and display time, the expected sending and display time may be further packaged and assigned to a refresh rate parameter through a composition procedure interface of the display system SF, and transmitted to an output file. Then, the expected sending and display time is transmitted to an SF display file and a first composition file through a composition strategy selection interface of the output file.

In a possible implementation, the determining whether the target frame is a first frame and whether a current time is less than an earliest sending and display time may include: determining, by using the first composition file, whether the target frame is the first frame and whether the current time is less than the earliest sending and display time.

In a possible implementation, the sending the expected sending and display time to a module HWC for window composition and display in a hardware abstraction layer may include: first transmitting the expected sending and display time to a second composition file by using the first composition file; and then transmitting the expected sending and display time to the module HWC for window composition and display in the hardware abstraction layer through an expected sending and display time setting interface of the second composition file.

In a possible implementation, the transmitting the expected sending and display time to the module HWC for window composition and display in the hardware abstraction layer through an expected sending and display time setting interface of the second composition file may include: transmitting the expected sending and display time to the module HWC for window composition and display in the hardware abstraction layer based on a preset format through the expected sending and display time setting interface of the second composition file.

In a possible implementation, the expected sending and display time is 64-bit data; and the transmitting the expected sending and display time to the module HWC for window composition and display in the hardware abstraction layer through an expected sending and display time setting interface of the second composition file may include: splitting the 64-bit expected sending and display time into two 32-bit expected sending and display times through the expected sending and display time setting interface of the second composition file, and transmitting the two 32-bit expected sending and display times to the module HWC for window composition and display in the hardware abstraction layer, to improve accuracy of transmitting the expected sending and display time.

In a possible implementation, the calculating, based on the expected sending and display time and a period of the virtual level VSYNC signal, a time period in which the HWC needs to suspend sending and display may include: first receiving the two 32-bit expected sending and display times by using an HWC display file, and reassembling the two 32-bit expected sending and display times to obtain a reassembled expected sending and display time; and then calculating a difference between the reassembled expected sending and display time and the period of the virtual level VSYNC signal, and using the obtained time difference as the time period in which the HWC needs to suspend sending and display.

According to a second aspect, this application provides an electronic device. The electronic device includes a memory and a processor. The memory stores a computer program, and the processor is configured to invoke and execute the computer program, to implement the frame sending and display time anchoring method in any implementation of the first aspect.

According to a third aspect, this application provides a computer-readable storage medium. The computer-readable storage medium stores a computer program, and when the program is run by a processor of an electronic device, the frame sending and display time anchoring method in any implementation of the first aspect is implemented.

According to a fourth aspect, this application provides a computer program product. When the computer program product is run on a computer, the computer is enabled to perform the frame sending and display time anchoring method in any implementation of the first aspect.

### BRIEF DESCRIPTION OF DRAWINGS

FIG. 1 is a schematic diagram of a scenario according to an embodiment of this application;
FIG. 2 is a schematic diagram of frame loss occurring when a frame sending and display time is not anchored according to an embodiment of this application;
FIG. 3 is a schematic diagram of displaying a frame sending and display time according to an embodiment of this application;
FIG. 4 is a schematic diagram of current frame sending and display time anchoring according to an embodiment of this application;
FIG. 5 is a schematic diagram of an electronic device according to an embodiment of this application;
FIG. 6 is a block diagram of a software structure of an electronic device according to an embodiment of this application;
FIG. 7 is a flowchart of a frame sending and display time anchoring method according to an embodiment of this application;
FIG. 8 is a signaling diagram of a frame sending and display time anchoring method according to an embodiment of this application;
FIG. 9 is a schematic diagram of a frame sending and display time anchoring principle according to an embodiment of this application; and
FIG. 10 is a schematic diagram of a frame sending and display time anchoring effect according to an embodiment of this application.

### DESCRIPTION OF EMBODIMENTS

The following clearly and completely describes technical solutions in embodiments of this application with reference to the accompanying drawings in embodiments of this application. The terms used in the following embodiments are merely used for describing specific embodiments, and are not intended to limit this application. As used in the specification and the appended claims of this application, singular expressions "one", "a", "the", "the foregoing", and "this" are also intended to include an expression such as "one or more", unless otherwise clearly specified in the context.

As described in this specification, referring to "one embodiment" or "some embodiments" or the like means that one or more embodiments of this application include particular features, structures, or characteristics described with reference to the embodiments. Therefore, statements such as "in one embodiment", "in some embodiments", or "in some other embodiments" that appear in different parts of this specification do not necessarily refer to same embodiments, but mean "one or more but not all embodiments", unless otherwise specifically emphasized in other manners. The terms "include", "comprise", "have", and variants thereof all mean "include but are not limited to", unless otherwise specially emphasized in other manners.

In the embodiments of this application, "a plurality of" means "greater than or equal to two". It should be noted that in the description of embodiments of this application, words such as "first" and "second" are merely used for distinguishing, and cannot be understood as an indication or implication of relative importance or an indication or implication of a sequence.

To make persons skilled in the art more clearly understand the solutions of this application, application scenarios of the technical solutions of this application are first described below.

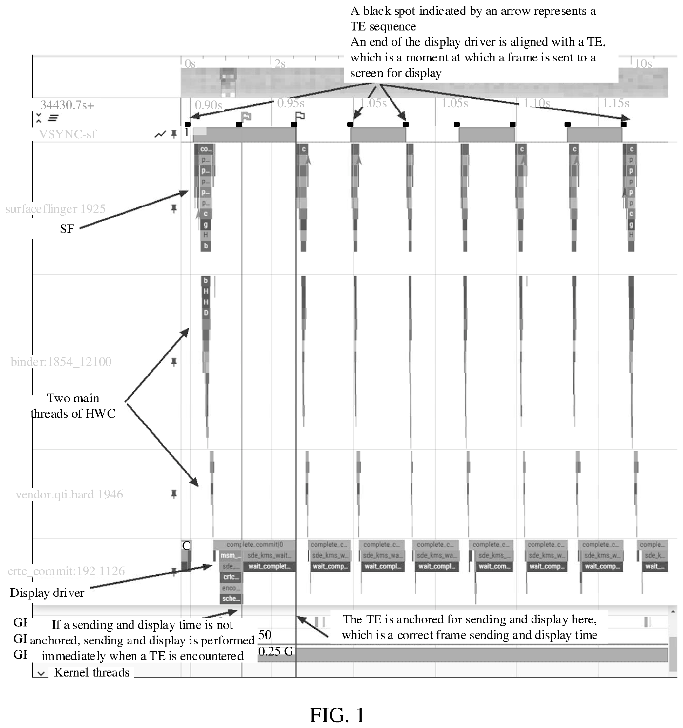

FIG. 1 is a schematic diagram of a scenario according to an embodiment of this application.

In this example scenario, currently, when an image is displayed on a display screen of any terminal device, a frame sending and display time is usually controlled based on a TE (Tearing Effect Signal) sequence. Herein, the TE is a signal sequence determined by a display driver of the terminal device based on a refresh rate of the display screen. For example, the refresh rate of the display screen is 120 Hz. When the refresh rate of the screen is 120 Hz, 20 frames need to be refreshed per second on the display screen, that is, a frame interval is 8.3 milliseconds, and then the TE sequence may be determined. Further, a virtual level vertical synchronization (Vertical Synchronization, VSYNC) signal may be obtained through fitting based on the TE sequence, to trigger a display system (Surface Flinger, SF) to obtain a layer. After processing and composition are performed through a module HWC (hwcomposer) for window composition and display in a hardware abstraction layer (Hardware Abstraction Layer, HAL), a screen interface of the terminal device is rendered and displayed through the display driver.

The Surface Flinger is usually disposed in a system library in a software framework layer of the terminal device, and is configured to: when a jump occurs in the VSYNC signal, obtain, for preprocessing, a layer that is rendered by an APP (which may be considered as a producer). In some embodiments, the Surface Flinger generates a software VSYNC model based on a received hardware VSYNC signal (or the virtual level VSYNC signal obtained through fitting based on the TE) sent by the display driver. The software VSYNC model is used to generate, when an image picture display request sent by an application is received, a virtual level VSYNC signal based on a VSYNC period simulated by the software VSYNC model based on the TE. The VSYNC signal is used to control drawing and rendering of a displayed picture and a rhythm of layer composition, that is, to control an occasion of obtaining a layer by the SF for preprocessing (consumption), that is, to wake up the SF to obtain each layer parameter for preprocessing, and transmit an obtained processing result to the HWC in the HAL layer for further processing and composition.

FIG. 1 shows a sending and display procedure for implementing picture composition from top to bottom from the SF to the HWC. When a jump occurs in the virtual level VSYNC signal (namely, Vsync-sf in FIG. 1) used by the Surface Flinger, the SF is triggered to obtain a layer for preprocessing (consumption). Information such as each preprocessed layer parameter is packaged and transmitted to two main threads of the HWC, and then submitted to a thread function crtc_commit of the display driver to complete sending and display.

Specifically, as shown in FIG. 1, in an actual application, the layer rendered by the APP (producer) is further processed and composed by the SF (a consumer corresponding to the producer), and then sent to the screen for display. The occasion of obtaining a layer by the SF for preprocessing (consumption) is controlled by using the virtual level VSYNC (namely, Vsync-sf in FIG. 1) signal. When a jump occurs in the VSYNC-sf signal (a rising edge or a falling edge appears, as shown in FIG. 1), the SF is waked up to work. Working content of the SF may be summarized as preprocessing various layer parameters. For example, based on parameters such as a Z-axis order (Z_order), transparency, a size, and a position, each layer is cropped, a visible area of each layer is calculated, a layer that will eventually participate in composition is obtained through filtering, and a layer composition manner is queried. An obtained preprocessing result (namely, the preprocessed parameter) is transmitted to the HWC in the HAL layer for further processing and composition. That is, actual layer overlay and image composition are completed in the HWC.

The HWC (hwcomposer) is a module for layer picture composition and display in the HAL layer in an Android system (Android), and overlay work of each layer is completed by the HWC. The HWC may mainly include but is not limited to two key threads: binder and vendor.qti.hardware.display.composer-service. As shown in FIG. 1, the two key threads are respectively used to receive a preprocessed parameter sent by the SF and submit overlaid data to the display driver in a driver layer to send the data to the screen for picture display.

The display driver is located in the driver layer in the Android system (Android), and is configured to perform final composition and sending and display operations on a layer picture. The display driver mainly implements sending and display by invoking a complete_commit function through the crtc_commit thread, and a completion occasion of the complete_commit function is aligned with a TE signal. FIG. 1 indicates that a currently composed frame is sent to and displayed on the screen, and reflects that a final frame sending and display occasion is determined based on the TE signal.

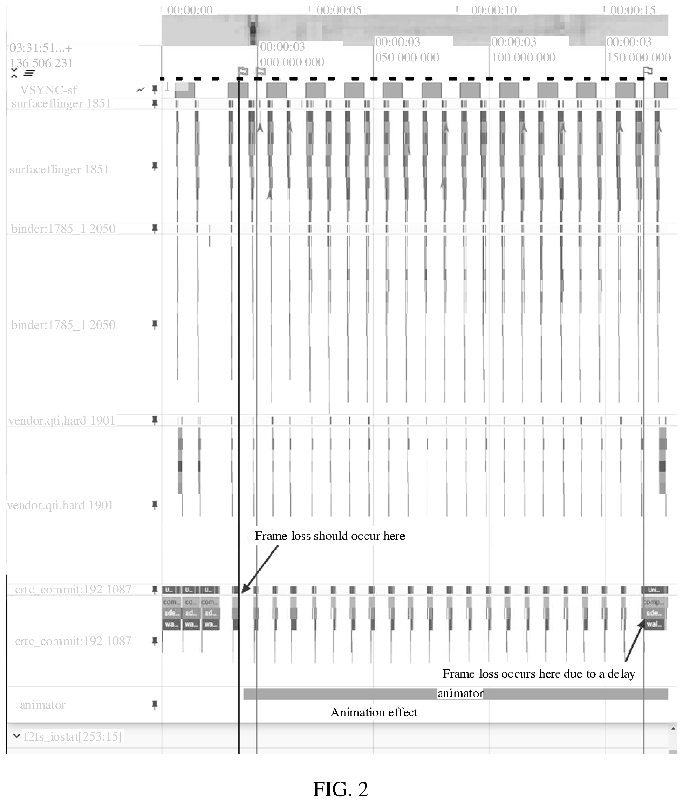

It should be noted that in a process in which a frame composed through the SF, the HWC, and the crtc_commit thread in the display driver is finally sent to and displayed on the screen at a TE signal, the TE signal at which the frame will be sent and displayed is actually anchored when the frame is composed from a source of the SF. This is because if a sending and display time of the frame is not anchored, a phenomenon shown in FIG. 2 occurs: After the Vsync model is adjusted, a composed frame is composed immediately after encountering a TE signal. This phenomenon superficially shortens an interval between sending and displaying two consecutive frames, making display more continuous and compensating for impact of frame loss. However, actually, this phenomenon just delays a frame loss occasion. However, this delay usually brings frame loss outside an animation effect (for example, when a user taps any application icon on the screen to start the application) into the animation effect, which is more noticeably perceived by the user, degrading user experience. In addition, frame loss in the animation effect is more easily perceived. For example, in a scenario in which the user starts/exits the animation effect of the application, swipes up to enter multitasking, and transitions the animation effect, a phenomenon such as a lag may occur.

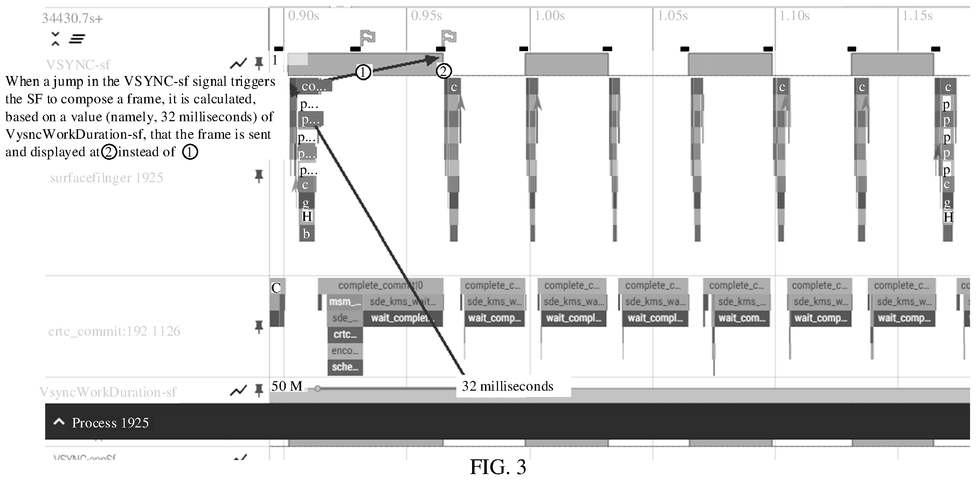

Therefore, when the display driver sends and displays a frame on the screen, a specific TE signal at which the frame is sent and displayed may be calculated based on the VSYNC-sf signal and work duration VysncWorkDuration-sf of the VSYNC-sf signal. As shown in FIG. 3, for example, a value of VysncWorkDuration-sf is 32 milliseconds. When a jump in the VSYNC-sf signal triggers the SF to compose a frame, it may be calculated, based on the value (namely, 32 milliseconds) of VysncWorkDuration-sf, that the frame needs to be sent and displayed at (2) shown in FIG. 3 instead of ①.

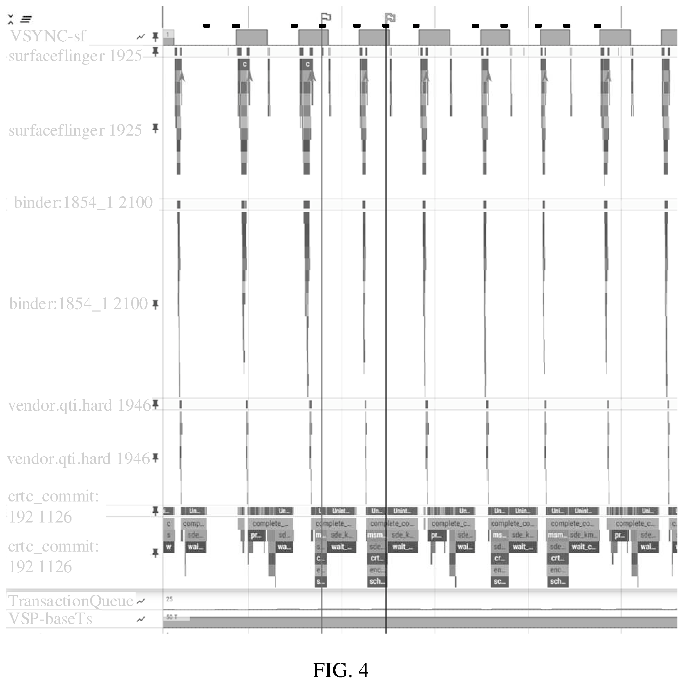

FIG. 4 is a schematic diagram of current frame sending and display time anchoring according to an embodiment of this application.

A current frame sending and display time anchoring process may be summarized as follows: Each time an SF composes a frame, an expected sending and display time of the current frame is packaged, then transmitted along with a composition procedure to an HWC, and then transmitted to a display driver, and finally, the received expected sending and display time is processed in the display driver to implement frame sending and display time anchoring. However, the current frame sending and display time anchoring method has two problems. One problem is that an expected sending and display time is packaged and transmitted for each frame, resulting in relatively high power consumption of a terminal device. The other problem is that in the current frame sending and display time anchoring method, a parameter, namely, the expected sending and display time, needs to be transmitted to the lower-layer display driver in an Android system for processing. This lengthens a parameter transmission and calculation path, and results in relatively poor maintainability of the method because more services are aggregated at the bottom layer. Consequently, a frame sending and display time anchoring effect is reduced.

To overcome the foregoing technical problem, this application provides a frame sending and display time anchoring method, an electronic device, and a storage medium, to reduce frame sending and display time anchoring costs, shorten a parameter transmission path, and improve maintainability of the anchoring method, so as to improve a frame sending and display time anchoring effect.

The frame sending and display time anchoring method provided in the embodiments of this application is applicable to electronic devices (namely, terminal devices) such as a mobile phone, a tablet computer, a personal digital assistant (Personal Digital Assistant, PDA), a desktop computer, a laptop computer, a notebook computer, an ultra-mobile personal computer (Ultra-mobile Personal Computer, UMPC), a handheld computer, a netbook, and a wearable device.

To make persons skilled in the art more clearly understand the frame sending and display time anchoring method provided in this application, a hardware architecture and a software system architecture of the electronic device are first described in detail below.

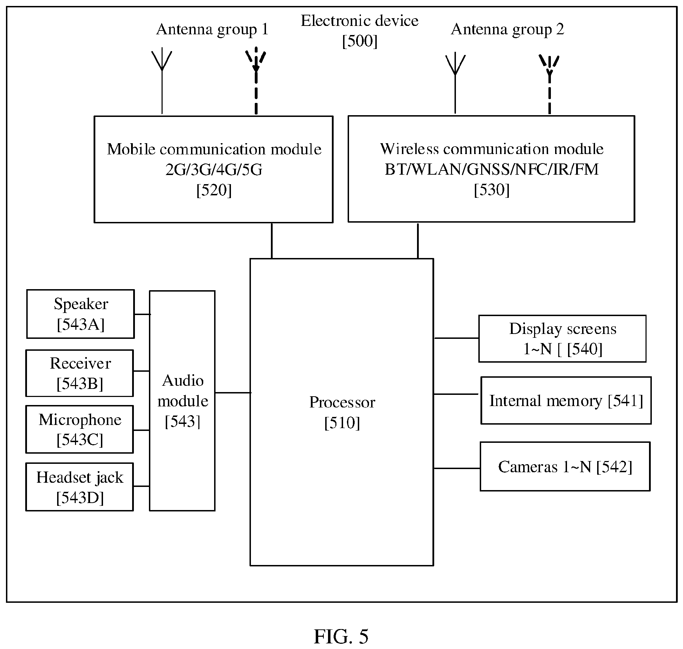

FIG. 5 is a schematic diagram of an electronic device according to an embodiment of this application.

As shown in FIG. 5, an electronic device 500 may include a processor 510, a mobile communication module 520, a wireless communication module 530, a display screen 540, an internal memory 541, a camera 542, an audio module 543, a speaker 543A, a receiver 543B, a microphone 543C, a headset jack 543D, an antenna group 1, and an antenna group 2.

It may be understood that the structure shown in this embodiment of the present invention does not constitute a specific limitation on the electronic device 500. In some other embodiments of this application, the electronic device 500 may include more or fewer components than those shown in the figure, some components may be combined, some components may be split, or components may be arranged in different manners. The components shown in the figure may be implemented by hardware, software, or a combination of software and hardware.

The processor 510 may include one or more processing units. For example, the processor 510 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors. The controller may generate an operation control signal based on instruction operation code and a timing signal, to control instruction fetching and instruction execution. For example, the controller may determine a TE signal sequence or the like determined based on a refresh rate of the display screen, to control a frame sending-for-display time.

A memory may be further disposed in the processor 510, and is configured to store instructions and data. In some embodiments, the memory in the processor 510 is a cache memory. The memory may store instructions or data recently used or cyclically used by the processor 510. If the processor 510 needs to use the instructions or the data again, the processor 510 may directly invoke the instructions or the data from the memory. This avoids repeated access and reduces a waiting time of the processor 510, thereby improving system efficiency.

The internal memory 541 may be configured to store computer-executable program code, and the executable program code includes instructions. The internal memory 541 may include a program storage area and a data storage area. The program storage area may store an operating system, an application required by at least one function (for example, a sound collection function or an image shooting function), and the like. The data storage area may store data (such as audio data and image data) created in a use process of the electronic device 500. In addition, the internal memory 541 may include a high-speed random access memory, and may further include a non-volatile memory, for example, at least one magnetic disk storage device, a flash memory device, or a universal flash storage (universal flash storage, UFS). The processor 510 performs various function applications and data processing of the electronic device 500 by running the instructions stored in the internal memory 541 and/or the instructions stored in the memory disposed in the processor.

In some embodiments, the internal memory 541 stores instructions for performing the frame sending and display time anchoring method. The processor 510 may execute the instructions stored in the internal memory 541 to implement the following operations: when it is detected that a jump occurs in a virtual level VSYNC signal, calculating an expected sending and display time of a target frame through a display system SF; then determining whether the target frame is a first frame and whether a current time is less than an earliest sending and display time; and if yes, sending the expected sending and display time to an HWC. In this way, the HWC calculates, based on the expected sending and display time and a period of the virtual level VSYNC signal, a time period in which the HWC needs to suspend sending and display. In addition, the HWC is controlled, based on the time period in which the HWC needs to suspend sending for display, to perform a sleep operation until an incorrect sending-for-display time is missed, and when the correct expected sending and display time is reached, the HWC performs an operation of sending the target frame to the screen for display.

The display screen 540 is configured to display an image, a video, or the like, for example, display a layer picture that is sent by the HWC or the display driver for display. The display screen 540 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 500 may include one or N display screens 540, where N is a positive integer greater than 1.

The camera 542 is configured to capture a still image or a video. In some embodiments, the electronic device 500 may include one or N cameras 542, where N is a positive integer greater than 1.

The electronic device 500 implements a display function by using the GPU, the display screen 540, the application processor, and the like. The GPU is a microprocessor for image processing, and is connected to the display screen 540 and the application processor. The GPU is configured to perform mathematical and geometric computing for graphics rendering. The processor 510 may include one or more GPUs, and the one or more GPUs execute program instructions to generate or change display information.

The electronic device 500 may implement an audio function by using the audio module 543, the speaker 543A, the receiver 543B, the microphone 543C, the headset jack 543D, the application processor, and the like, for example, implement input and output of a voice such as music playing and audio recording.

The audio module 543 is configured to convert digital audio information into an analog audio signal for output, and is further configured to convert an analog audio input into a digital audio signal. The audio module 543 may be further configured to encode and decode an audio signal. In some embodiments, the audio module 543 may be disposed in the processor 510 or some functional modules in the audio module 543 may be disposed in the processor 510.

The speaker 543A, also referred to as a "loudspeaker", is configured to convert an audio electrical signal into a sound signal. The electronic device 500 may be used to listen to music or answer a call in a hands-free mode by using the speaker 543A.

The receiver 543B, also referred to as an "earpiece", is configured to convert an audio electrical signal into a sound signal. When the electronic device 500 is used to answer a call or listen to a voice message, the receiver 543B may be placed near a human ear to listen to a voice.

The microphone 543C, also referred to as a "mic" or "mike", is configured to convert a sound signal into an electrical signal. When making a call or sending a voice message, the user may make a sound by approaching the mouth to the microphone 543C, to input a sound signal to the microphone 543C. At least one microphone 543C may be disposed in the electronic device 500. In some other embodiments, two microphones 543C may be disposed in the electronic device 500, to implement a noise reduction function in addition to collecting a sound signal. In some other embodiments, three, four, or more microphones 543C may alternatively be disposed in the electronic device 500, to collect a sound signal, reduce noise, further identify a sound source, implement a directional recording function, and the like.

The headset jack 543D is configured to be connected to a wired headset, and a standard attribute of the jack is not limited.

It may be understood that an interface connection relationship between the modules shown in this embodiment of this application is merely an example for description, and constitutes no limitation on the structure of the electronic device 500.

A wireless communication function of the electronic device 500 may be implemented by using the antenna 1, the antenna 2, the mobile communication module 520, the wireless communication module 530, the modem processor, the baseband processor, and the like.

The antenna 1 and the antenna 2 are configured to transmit and receive electromagnetic wave signals. Each antenna in the electronic device 500 may be configured to cover one or more communication frequency bands. Different antennas may be further reused to improve antenna utilization. For example, the antenna 1 may be reused as a diversity antenna of a wireless local area network. In some other embodiments, the antenna may be used together with a tuning switch.

The mobile communication module 520 may provide wireless communication solutions that are applied to the electronic device 500 and that include 2G/3G/4G/5G and the like. The mobile communication module 520 may include at least one filter, a switch, a power amplifier, a low noise amplifier (LNA), and the like. The mobile communication module 520 may receive an electromagnetic wave through the antenna 1, perform processing such as filtering or amplification on the received electromagnetic wave, and transfer a processed electromagnetic wave to the modem processor for demodulation. The mobile communication module 520 may further amplify a signal obtained after modulation by the modem processor, and convert, through the antenna 1, an amplified signal into an electromagnetic wave for radiation. In some embodiments, at least some functional modules in the mobile communication module 520 may be disposed in the processor 510. In some embodiments, at least some functional modules in the mobile communication module 520 may be disposed in a same component as at least some modules in the processor 510.

The wireless communication module 530 may provide a wireless communication solution that is applied to the electronic device 500 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 530 may be one or more components integrating at least one communication processing module. The wireless communication module 530 receives an electromagnetic wave through the antenna 2, performs frequency modulation and filtering processing on an electromagnetic wave signal, and sends a processed signal to the processor 510. The wireless communication module 530 may further receive a to-be-sent signal from the processor 510, perform frequency modulation and amplification on the to-be-sent signal, and convert, through the antenna 2, the to-be-sent signal into an electromagnetic wave for radiation.

In addition, the electronic device 500 runs an operating system on the foregoing components, for example, an iOS operating system, an Android operating system, a Windows operating system, or the like. An application may be installed and run on the operating system.

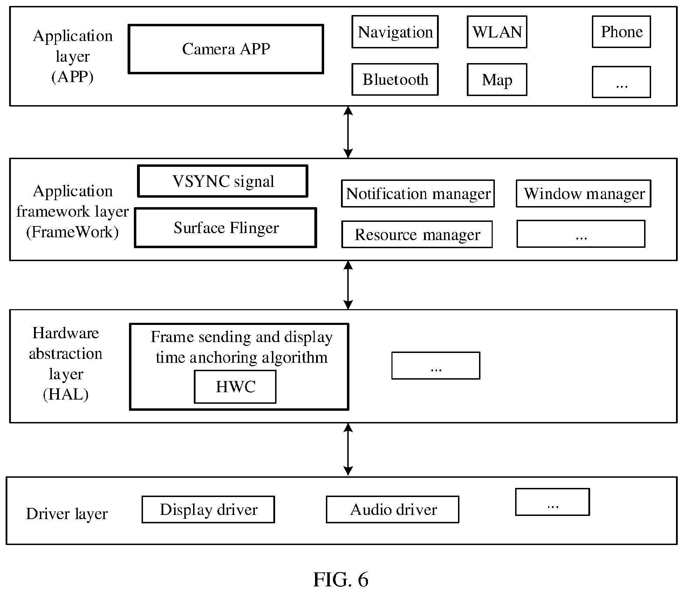

FIG. 6 is a schematic diagram of a software structure of an electronic device according to an embodiment of this application.

A software system of the electronic device 500 may use a layered architecture, an event-driven architecture, a microkernel architecture, a microservice architecture, or a cloud architecture. In the embodiments of this application, an Android system with a layered architecture is used as an example to describe the software structure of the electronic device 500.

**In** the layered architecture, software is divided into several layers, and each layer has a clear role and task. The layers communicate with each other through software interfaces. In some embodiments, the Android system is divided into four layers from top to bottom: an application layer (APK), an application framework (Framework) layer, a hardware abstraction layer (HAL), and a driver layer.

The application layer may include a series of application packages (APP). As shown in FIG. 6, the application packages may include applications such as Camera, Phone, Navigation, WLAN, Bluetooth, and Map. When a user uses the electronic device 500 to take photos, make video calls, record videos, or livestream videos, a camera application may be used as a producer to communicate with the framework layer (specifically, a Surface Flinger) to request a camera function and obtain layer data for subsequent processing.

The application framework layer (framework layer) provides an application programming interface (application programming interface, API) and a programming framework for applications in the application layer. The application framework layer includes some predefined functions. As shown in FIG. 6, the application framework layer may include a window manager, a notification manager, a resource manager, a Surface Flinger, a VSYNC signal (namely, a VSYNC-sf signal) that is used to trigger the Surface Flinger to obtain a layer parameter for preprocessing, and the like. The application framework layer may be configured to implement interaction between a camera service and a camera API. That is, the application framework layer provides a unified interface, so that different camera hardware can interact with different camera applications. The framework layer may be further configured to process many common aspects of camera functions, such as autofocus, exposure control, and the like.

When it is detected that a jump occurs in the VSYNC-sf signal, after identifying that a target frame that needs to be sent and displayed is a first frame, the Surface Flinger packages and transmits an expected sending and display time only for the first frame, and calculates a layer parameter. This replaces an existing solution in which for each frame, a corresponding TE is anchored, a layer parameter is calculated, and calculation is performed, to reduce frame sending and display time anchoring costs.

The window manager is configured to manage a window program. The window manager may obtain a size of a display screen, determine whether there is a status bar, lock the screen, take a screenshot, and the like.

The notification manager enables the application to display notification information in a status bar, and may be configured to convey a notification-type message. The displayed notification information may automatically disappear after a short stay without user interaction. For example, the notification manager is configured to provide a notification of download completion, a message reminder, and the like.

The resource manager provides various resources for an application, for example, a localized string, an icon, a picture, a layout file, and a video file.

**In** this embodiment, the hardware abstraction layer (HAL) may be provided with a set of standard interfaces, so that the framework layer can communicate with camera hardware from various different manufacturers without knowing underlying hardware details. The hardware abstraction layer (HAL) stores a module HWC (hwcomposer) for window composition and display, and the like. It should be noted that to shorten a layer parameter transmission path and improve maintainability of the anchoring method, in this application, related layer parameter receiving and processing logic in an existing display driver no longer needs to be used. Instead, layer parameter delivery is blocked in the HWC, and related frame sending and display logic in the display driver is removed and deployed in the HWC, to anchor the sending and display time through the HWC. In this way, an existing solution of anchoring a frame sending and display time in an underlying display driver is replaced, and anchoring of the expected sending and display time is optimized, that is, a parameter transmission path is shortened, and maintainability of the anchoring method is improved.

In this way, sending and display of different layer pictures on an Android platform can be implemented through the APP in the application layer, the VSYNC-sf signal and the SF in the framework layer, and the HWC in the HAL layer. In addition, frame sending and display time anchoring costs are reduced, a parameter transmission path is shortened, and maintainability of the anchoring method is improved, to improve a frame sending and display time anchoring effect.

All technical solutions described in the following embodiments can be implemented in an electronic device having the foregoing hardware architecture and software architecture.

The following describes in detail an implementation process of the frame sending and display time anchoring method provided in this application.

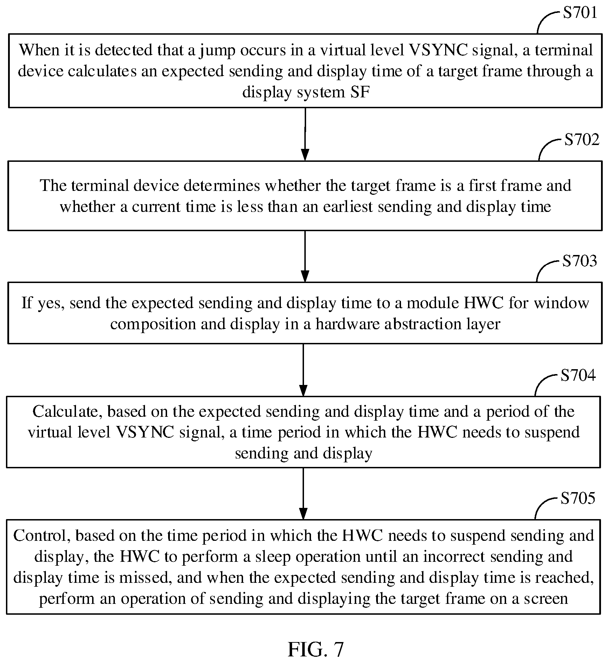

As shown in FIG. 7, a specific implementation process of the frame sending and display time anchoring method may include the following steps S701-S705.

S701: When it is detected that a jump occurs in a virtual level VSYNC signal, a terminal device calculates an expected sending and display time of a target frame through a display system SF.

In this embodiment, when an image picture is displayed on a display screen of any terminal device, a TE sequence is first determined based on a refresh rate of the display screen of the terminal device, and then a virtual level VSYNC signal (namely, a VSYNC-sf signal) is obtained through fitting based on the TE sequence, and is used to control an occasion of obtaining a layer by Surface Flinger for preprocessing (consumption).

Then, when it is detected that a jump occurs in the VSYNC signal, that is, when it is detected that a rising edge or a falling edge appears in the VSYNC signal, the expected sending and display time (represented by using expectedPresentTime) of the target frame (which is a frame that currently needs to be composed for sending and display) is calculated through the Surface Flinger. Specifically, when a jump occurs in the VSYNC-sf signal, during frame composition through the SF, the expected sending and display time of the target frame may be calculated based on the VSYNC signal and work duration VysncWorkDuration (for example, 32 milliseconds) of the VSYNC signal. For example, as shown in FIG. 3, when a jump in the VSYNC-sf signal triggers the SF to compose a frame, it may be calculated, based on a value (namely, 32 milliseconds) of VysncWorkDuration-sf, that the expected sending and display time of the target frame is ②, that is, the target frame needs to be sent and displayed at ② instead of ①.

S702: The terminal device determines whether the target frame is a first frame and whether a current time is less than an earliest sending and display time.

It should be noted that after analyzing a frame sending and display time anchoring process, the applicant finds that when the SF continuously composes frames, after a corresponding TE is anchored for the first frame and the sending and display time is determined, a subsequent frame is automatically sent and displayed at a corresponding TE, and a case in which a TE for a previous frame is incorrectly anchored no longer occurs. Therefore, anchoring of a TE for the first frame can ensure accuracy of a subsequent sending and display time. However, there is actually redundancy in an existing solution in which an expected sending and display time is packaged and transmitted for each frame, and a sending and display time is repeatedly calculated for each frame.

Therefore, to reduce frame sending and display time anchoring costs and improve anchoring efficiency, in this application, after calculating the expected sending and display time of the target frame through step S701, the terminal device may further first package and assign the expected sending and display time expectedPresentTime to a refresh rate parameter (refreshArgs) through a composition procedure interface (represented by using composite()) of the display system SF, and transmit the expected sending and display time to an output file (Output.cpp). Then, the expected sending and display time expectedPresentTime is transmitted to an SF display file (represented by using Display.cpp) and a first composition file (represented by using HWComposer.cpp) through a composition strategy selection interface (represented by using chooseCompositionStrategy()) of the output file (Output.cpp). Then, it is determined, by using the first composition file, whether the target frame is the first frame and whether the current time is less than the earliest sending and display time. If yes, subsequent step S703 continues to be performed. That is, when a composition time point of VSYNC-sf is later than a sending and display time of a previous frame, it is determined that a currently composed frame (namely, the target frame) is the first frame, and subsequent step S703 continues to be performed. Otherwise, it is determined that the currently composed frame is not the first frame, and no TE anchoring processing is performed.

S703: If yes, send the expected sending and display time to a module HWC for window composition and display in a hardware abstraction layer.

If the terminal device determines, through step S702, that the target frame is the first frame and the current time is less than the earliest sending and display time, the terminal device may further transmit the expected sending and display time to a second composition file (represented by using Hwc2.cpp) by using the first composition file (HWComposer.cpp); and transmit the expected sending and display time expectedPresentTime to the HWC in the HAL layer through an expected sending and display time setting interface (represented by using setExpectedPresentTime()) of the second composition file. Specifically, the expected sending and display time expectedPresentTime may be transmitted to the HWC in the HAL layer based on a preset format.

Specific content of the preset format is not limited, and may be determined based on a hardware composition result of the HWC. In an optional implementation, when the expected sending and display time is 64-bit data, the 64-bit expected sending and display time may be split into two 32-bit expected sending and display times through the expected sending and display time setting interface of the second composition file, and the two 32-bit expected sending and display times may be transmitted to the HWC.

S704: Calculate, based on the expected sending and display time and a period of the virtual level VSYNC signal, a time period in which the HWC needs to suspend sending and display.

It should be noted that to shorten a layer parameter transmission path and improve maintainability of the anchoring method, in this application, related layer parameter receiving and processing are no longer performed in a display driver. Instead, layer parameter delivery is blocked in the HWC in an upper layer of the display driver, and related frame sending and display logic in the display driver is removed and deployed in the HWC, to anchor the sending and display time through the HWC. In this way, an existing solution of anchoring a frame sending and display time in the underlying display driver is replaced, and anchoring of the expected sending and display time is optimized. This shortens a parameter transmission path, and improves maintainability of the anchoring method.

Specifically, after splitting the 64-bit expected sending and display time into two 32-bit expected sending and display times, and sending the two 32-bit expected sending and display times to the HWC, the second composition file in the SF of the terminal device may further receive the two 32-bit expected sending and display times by using an HWC display file (represented by using hwc_display.cpp), and reassemble the two 32-bit expected sending and display times to obtain a reassembled expected sending and display time. Then, a difference between the reassembled expected sending and display time and the period of the virtual level VSYNC signal is calculated, and the obtained time difference is used as the time period in which the HWC needs to suspend sending and display, namely, a time period in which sleep (sleep) is required to avoid an incorrect sending and display time.

S705: Control, based on the time period in which the HWC needs to suspend sending and display, the HWC to perform a sleep operation until an incorrect sending and display time is missed, and when the expected sending and display time is reached, perform an operation of sending and displaying the target frame on a screen.

After calculating, through step S704, the time period in which the HWC needs to suspend sending and display, the terminal device may further control, by using the time period in which the HWC needs to suspend sending and display, the HWC to perform the sleep (sleep) operation until the incorrect sending and display time is missed, and when the expected sending and display time is reached, perform the operation of sending and displaying the target frame on the screen.

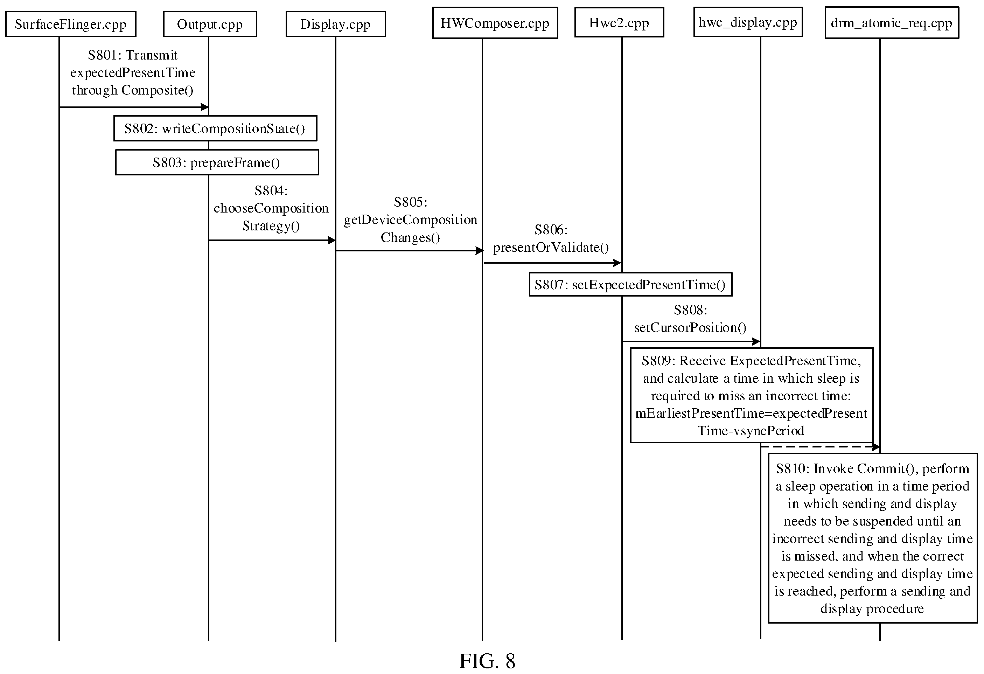

Specifically, as shown in FIG. 8, a specific implementation process of the foregoing frame sending and display time anchoring method may include the following steps S801-S810:
S801: SurfaceFlinger.cpp transmits expectedPresentTime to Output.cpp through a composition procedure Composite().

**In** this embodiment, when it is detected that a jump occurs in a VSYNC-sf signal, an SF may be triggered to obtain a layer for preprocessing, an expected sending and display time expectedPresentTime of a target frame is calculated, and then the expected sending and display time expectedPresentTime is packaged and assigned to a refresh rate parameter (refreshArgs) and transmitted to an output file (Output.cpp) along with the composition procedure composite().

S802: Output.cpp invokes an execution function writeCompositionState() to determine a composition state.

S803: Output.cpp invokes an execution function prepareFrame().

S804: Output.cpp transmits the expected sending and display time expectedPresentTime to Display.cpp through a composition strategy selection interface vendorchooseCompositionStrategy().

S805: Display.cpp invokes an execution function getDeviceCompositionChanges() to obtain a composition strategy of a terminal device and a change thereof, and transmits the expected sending and display time expectedPresentTime to HWComposer.cpp.

S806: HWComposer.cpp invokes an execution function presentOrValidate() to query a currently valid composition strategy from a bottom layer, and transmits the expected sending and display time expectedPresentTime to Hwc2.cpp.

Before transmitting the expected sending and display time expectedPresentTime to Hwc2.cpp, HWComposer.cpp may determine whether the current target frame is a first frame and whether a current time is less than an earliest sending and display time. If yes, when previousPresentFence is equal to SIGNAL_TIME_PENDING, the expected sending and display time expectedPresentTime continues to be transmitted to Hwc2.cpp. Otherwise, it is determined that the current target frame is not the first frame, and no TE anchoring processing is performed.

S807: Hwc2.cpp invokes an execution function setExpectedPresentTime() to set the expected sending and display time expectedPresentTime to an underlying HWC.

S808: Hwc2.cpp invokes an execution function setCursorPosition() to transmit the expected sending and display time expectedPresentTime to hwc_display.cpp.

S809: The display file hwc_display.cpp in the HWC receives, through an interface setCursorPosition(), the expected sending and display time expectedPresentTime transmitted by Hwc2.cpp, and calculates a time in which sleep (sleep) is required to miss an incorrect time: mEarliestPresentTime=expectedPresentTime-vsyncPeriod. Herein, vsyncPeriod represents a vsync period. For example, when a refresh rate of a display screen is 120 Hz, it may be determined that a value of the vsync period is 8.3 milliseconds, that is, vsyncPeriod=8.3 milliseconds.

It should be noted that for ease of understanding, an incorrect sending and display time may be marked as T0 and a correct expected sending and display time (namely, the expected sending and display time) as T1 in advance. In this case, T0=T1-vsyncPeriod.

S810: A file drm_atomic_req.cpp in the HWC invokes an execution interface function Commit() to perform a sleep operation, and after a time period in which sleep is required to suspend sending and display, when the correct expected sending and display time is reached, continue to perform a composition and sending and display procedure of a subsequent layer.

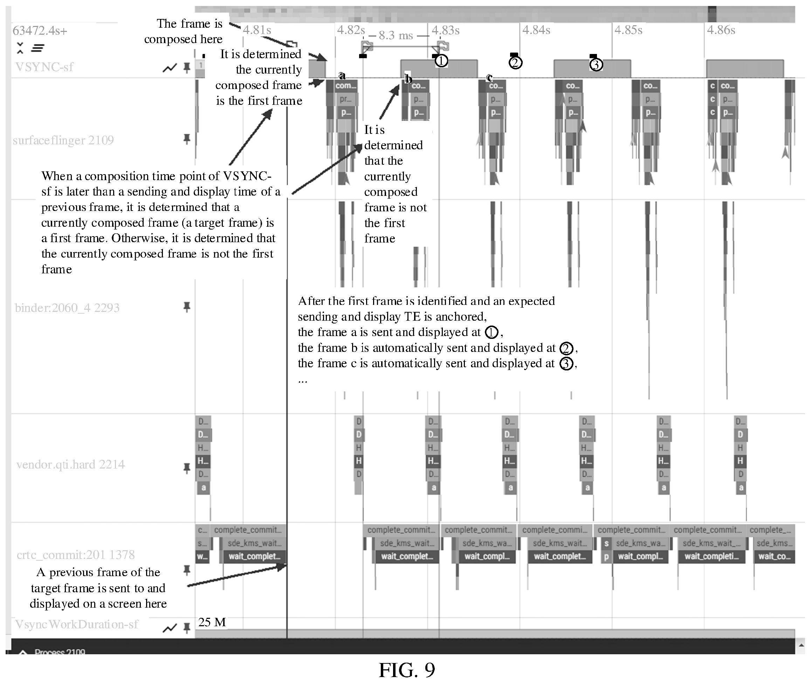

In conclusion, as shown in FIG. 9, when a composition time point of VSYNC-sf is later than a sending and display time of a previous frame, it is determined that a currently composed frame (the target frame) is the first frame (namely, a frame a in FIG. 9). Otherwise, it is determined that the currently composed frame is not the first frame (namely, a frame b in FIG. 9). In addition, after it is identified that the target frame is the first frame (namely, the frame a in FIG. 9) and an expected sending and display TE is anchored, the frame a is sent and displayed at ① in FIG. 9, the frame b is automatically sent and displayed at ② in FIG. 9, and a frame c is automatically sent and displayed at ③ in FIG. 9. By analogy, a sending and display time of each frame is anchored. This reduces frame sending and display time anchoring costs, and improves anchoring efficiency.

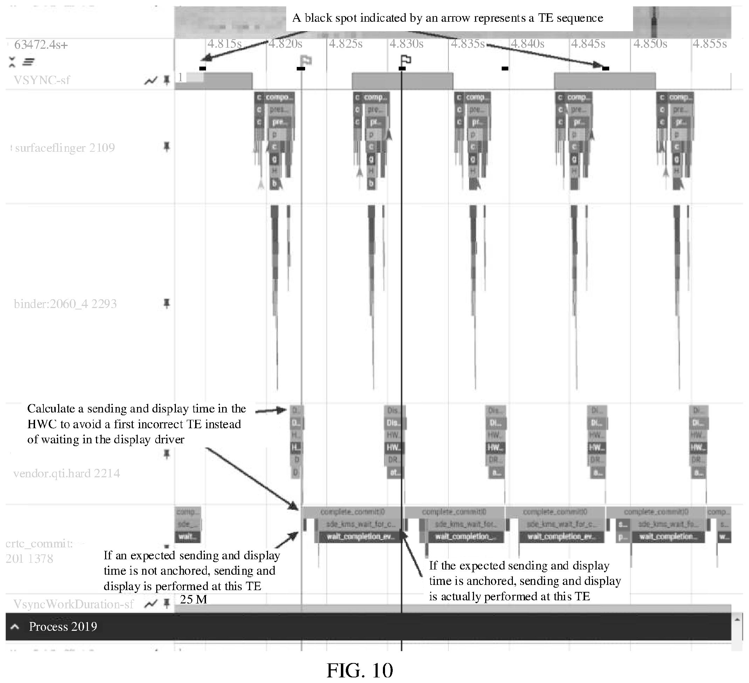

In addition, as shown in FIG. 10, the sending and display time is calculated in the HWC to avoid a first incorrect TE, instead of waiting in the display driver. In this way, anchoring of the expected sending and display time is optimized, that is, a parameter transmission path is shortened, and maintainability of the anchoring method is improved, to improve an anchoring effect.

In addition, an embodiment of this application further provides an electronic device (namely, a terminal device). For a hardware structure and a software framework of the electronic device, refer to descriptions corresponding to FIG. 5 and FIG. 6. The electronic device includes a memory and a processor. The memory stores a computer program, and the processor is configured to invoke and execute the computer program, to implement the frame sending and display time anchoring method provided in the foregoing descriptions.

An embodiment of this application further provides a computer-readable storage medium. The computer-readable storage medium stores a computer program, and when the computer program is run by a processor of a terminal device, the frame sending and display time anchoring method provided in the foregoing descriptions is implemented.

As described above, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A frame sending and display time anchoring method, applied to a terminal device, wherein the method comprises:
when it is detected that a jump occurs in a virtual level VSYNC signal, calculating an expected sending and display time of a target frame through a display system SF;
determining whether the target frame is a first frame and whether a current time is less than an earliest sending and display time;
if yes, sending the expected sending and display time to a module HWC for window composition and display in a hardware abstraction layer;
calculating, based on the expected sending and display time and a period of the virtual level VSYNC signal, a time period in which the HWC needs to suspend sending and display; and
controlling, based on the time period in which the HWC needs to suspend sending and display, the HWC to perform a sleep operation until an incorrect sending and display time is missed, and when the expected sending and display time is reached, performing an operation of sending and displaying the target frame on a screen.

2. The method according to claim 1, wherein the VSYNC signal is a virtual signal obtained through fitting based on a refresh rate of the display screen of the terminal device; and the VSYNC signal is used to control an occasion of obtaining a layer by the display system SF for preprocessing.

3. The method according to claim 1, wherein the calculating an expected sending and display time of a target frame through a display system SF comprises:
calculating the expected sending and display time of the target frame through the display system SF based on the VSYNC signal and work duration VysncWorkDuration of the VSYNC signal.

4. The method according to claim 1, wherein before the determining whether the target frame is a first frame and whether a current time is less than an earliest sending and display time, the method further comprises:
packaging and assigning the expected sending and display time to a refresh rate parameter through a composition procedure interface of the display system SF, and transmitting the expected sending and display time to an output file; and
transmitting the expected sending and display time to an SF display file and a first composition file through a composition strategy selection interface of the output file.

5. The method according to claim 4, wherein the determining whether the target frame is a first frame and whether a current time is less than an earliest sending and display time comprises:
determining, by using the first composition file, whether the target frame is the first frame and whether the current time is less than the earliest sending and display time.

6. The method according to claim 5, wherein the sending the expected sending and display time to a module HWC for window composition and display in a hardware abstraction layer comprises:
transmitting the expected sending and display time to a second composition file by using the first composition file; and
transmitting the expected sending and display time to the module HWC for window composition and display in the hardware abstraction layer through an expected sending and display time setting interface of the second composition file.

7. The method according to claim 6, wherein the transmitting the expected sending and display time to the module HWC for window composition and display in the hardware abstraction layer through an expected sending and display time setting interface of the second composition file comprises:
transmitting the expected sending and display time to the module HWC for window composition and display in the hardware abstraction layer based on a preset format through the expected sending and display time setting interface of the second composition file.

8. The method according to claim 7, wherein the expected sending and display time is 64-bit data; and the transmitting the expected sending and display time to the module HWC for window composition and display in the hardware abstraction layer through an expected sending and display time setting interface of the second composition file comprises:
splitting the 64-bit expected sending and display time into two 32-bit expected sending and display times through the expected sending and display time setting interface of the second composition file, and transmitting the two 32-bit expected sending and display times to the module HWC for window composition and display in the hardware abstraction layer.

9. The method according to claim 8, wherein the calculating, based on the expected sending and display time and a period of the virtual level VSYNC signal, a time period in which the HWC needs to suspend sending and display comprises:
receiving the two 32-bit expected sending and display times by using an HWC display file, and reassembling the two 32-bit expected sending and display times to obtain a reassembled expected sending and display time; and
calculating a difference between the reassembled expected sending and display time and the period of the virtual level VSYNC signal, and using the obtained time difference as the time period in which the HWC needs to suspend sending and display.

10. An electronic device, wherein the electronic device comprises a memory and a processor, the memory stores a computer program, and the processor is configured to invoke and execute the computer program, to implement the method according to any one of claims 1-9.

11. A computer-readable storage medium, wherein the computer-readable storage medium stores a computer program, and when the computer program is executed by an electronic device, the method according to any one of claims 1-9 is implemented.
